# EUROPEAN PATENT SPECIFICATION

(11) **EP 3 279 036 B1**
(45) Date of publication and mention of the grant of the patent: **27.10.2021**
(21) Application number: 17184697.5
(22) Date of filing: 03.08.2017
(51) Int. Cl.: B60Q 1/26, B60R 1/12, F21S 43/14, F21S 43/19, F21S 43/239, F21S 43/245, F21S 43/249, F21S 43/31, F21S 43/40

(54) **ILLUMINATION DEVICE, METHOD FOR PRODUCING THE SAME AND REARVIEW DEVICE**
BELEUCHTUNGSVORRICHTUNG, VERFAHREN ZUR HERSTELLUNG DAVON UND RÜCKBLICKVORRICHTUNG
DISPOSITIF D'ÉCLAIRAGE, PROCÉDÉ DE PRODUCTION DE CELUI-CI ET DISPOSITIF DE RÉTROVISEUR

(30) Priority: 04.08.2016 US 201615228566
(43) Date of publication of application: 07.02.2018
(73) Proprietor: SMR Patents S.à.r.l., 2453 Luxembourg (LU)
(72) Inventor: Kürschner, Norbert, 30900 Wedemark (DE); Fritz, Daniel, 70374 Stuttgart (DE); Meier, Eugen, 71245 Ditzingen (DE); Erhart, Volker, 73257 Köngen (DE); Little, Andrew Brian, Havant, Hampshire PO9 5BJ (GB); Welfare, Harry, Andover, Hants SP11 8FF (GB); Edney, Stephen, Emsworth, Hampshire PO10 8JX (GB)
(74) Representative: Weber-Bruls, Dorothée

(56) References cited:
- EP-A1- 1 591 314
- EP-A1- 2 565 084
- EP-A1- 2 796 322
- EP-A1- 3 045 944
- WO-A2-2008/051910
- DE-U1-202012 013 353
- US-A1- 2014 233 251

## Description

The invention relates to a rearview device for a motor vehicle having a rearview reflection surface and an illumination device, comprising: at least one light source, a printed circuit board to which the light source is coupled, and a light guiding device with a light incoupling side for incoupling light from the light source; a reflection side; and a light outcoupling side, which is disposed generally opposite the reflection side, wherein the distance between the reflection side and the light outcoupling side generally decreases as the distance from the light incoupling side increases, and wherein the reflection side is configured so that light arriving from the light incoupling side is deflected to the light outcoupling side. In addition, it refers to a method for producing such a rearview device with an illumination device.

WO 01/27529 A1 describes a light guide having an input edge surface, a back surface and an output surface, wherein a reflector is fastened directly to the back surface by gluing for example.

EP 2 796 322 A1 refers to a lightening device for a motor vehicle's external mirror.

EP 2 463 157 A1 discloses a rearview mirror assembly having at least one mirror base, a mirror head covering which covers a mirror glass in the mirror head, and an optical indicator light that produces light in reaction to a sensor signal to inform an operator about hazardous information, wherein the light shines through the mirror glass. The mirror glass is mounted on a backing plate that has a mounting space for at least one LED and at least one beveled light guide.

EP 1 167 870 A2 discloses a lamp for vehicles, especially for motor vehicles, comprising a lamp housing that is bounded by a front disc in the emission direction, and at least one elongate light conduction element having a light exit surface on its front side, a reflection surface on its rear side facing away from the front side and a light input surface at one end which is coupled to a light source, wherein the light exit surface of the light conduction element is configured as part of the front disc.

DE 20 2012 100398 U1 discloses an illumination apparatus having at least one illuminant that is arranged on a printed circuit board enabling it to be connected to a power supply, wherein the printed circuit board is at least partially imbedded in a transparent first casting compound that enables a selective light exit of the light generated by the illuminant over at least one light exit area. To this end the printed circuit board extends perpendicular to the light exit area, is arranged in and is at least partially surrounded by the first transparent casting compound, and at least one light influencing element having light-reflecting properties at least on one of its two main surfaces is arranged in the first casting compound.

EP 1 970 736 A1 relates to a rearview mirror for vehicles, especially motor vehicles, having a mirror glass mounted to a carrier plate and a indicator unit which is disposed behind the mirror glass and the carrier plate and generates a light beam by means of at least one illuminant, wherein the light beam is coupled into a light conductor, which is provided with decoupling optics by which the light beam is directed outward by at least one portion of the mirror glass that is at least partially reflection-free, wherein the light passing through the mirror glass is directed towards the driver.

EP 1 591 314 A1 describes a pattern-display signal device installed in a motor vehicle and electrically connected with one directional light of the motor vehicle to a control circuit for synchronous operation with said directional light, the pattern-display signal device comprising:
a flat base, said base comprising a peripheral flange and a receiving space surrounded by said peripheral flange; a reflector mounted in a bottom side of said receiving space of said base; a substrate pressed on said reflector inside said receiving space of said base, said substrate admitting light; a light source mounted in said receiving space of said base at one side of said substrate, said light source comprising a circuit board electrically connected with said directional light to said control circuit, and a plurality of light emitting diodes installed in said circuit board and aimed at one lateral side of said substrate; a pattern film bonded to said substrate, said pattern film having a design therein; a lens covered on said pattern film; first adhesive means adhering said lens to the peripheral flange of said base; and second adhesive means adhering said lens to said motor vehicle.

DE 20 2012 013 353 U1 teaches an optical lighting assembly for use in a vehicle wing mirror comprising: a circuit board on which at least one light source is mounted ; a light pipe disposed adjacent the light source for diffusing light from the light source, the light source being adjacent an edge of the light pipe is positioned; a mirror element containing at least one character; and wherein light propagating through the light pipe is reflected or refracted in a forward direction such that light exiting the light pipe is used to illuminate the at least one character is used.

WO 2008/051910 A2 discloses a mirror reflective element sub-assembly for an exterior rearview mirror assembly of a vehicle, said mirror reflective element sub-assembly comprising: a mirror reflective element; a mirror back plate attached at a rear surface of said mirror reflective element, said mirror back plate formed by injection molding and having a display receiving portion established thereat, said mirror back plate being molded to have an integral light baffle at said display receiving portion; a display element having a light source that is activatable to emit light, said display element attaching to said display receiving portion of said mirror back plate and said light source being activatable to emit light through said display receiving portion and through said light baffle; and wherein said light baffle is configured to allow light emanating from said display element to pass through said light baffle at a predetermined angle so that light exiting said mirror reflective element when said light source is activated is viewable from a direction that is one of (a) generally away from the vehicle when the mirror assembly is mounted to the vehicle so as to be principally viewed by drivers of other vehicles and so as to be substantially not viewed by the driver of the host vehicle, and (b) generally toward the driver of the vehicle when the mirror assembly is mounted to the vehicle so as to be principally viewed by the driver of the host vehicle and so as to be substantially not viewed by drivers of other vehicles, said light baffle substantially shielding the light emanating from said display element so that the light is substantially non- viewable from another direction.

US 2014/233251 A1 relates to a light module, for a motor vehicles, comprising a light source; a reflecting unit; and an optical waveguide; wherein the waveguide is formed by a plate-shaped body having an L-shaped cross section, the light-reflecting unit comprises a reflector arranged in front of a shorter input part of the waveguide, and wherein a place where a shorter inlet part of the waveguide passes into a longer outlet part of the waveguide, an angled surface is provided, for total reflection of light passing through the shorter inlet part of the waveguide to the longer outlet part of the waveguide, wherewith a bottom area and an adjacent face of the outlet part of the waveguide are provided with a white coating.

EP 2 565 084 A1 describes a vehicle door mirror comprising between a circumferential edge of a mirror body of a reflection mirror unit and a flange on a circumferential edge of a holder adapted to hold the mirror body, providing a gap for light emission in which the circumferential edges thereof are formed to be partially spaced from each other in a radial direction; and in the gap, secondarily disposing a light emitting portion of a lighting unit.

EP 3 045 944 A1 discloses a generic rearview device with an illumination device as shown in figures 1 to 6.

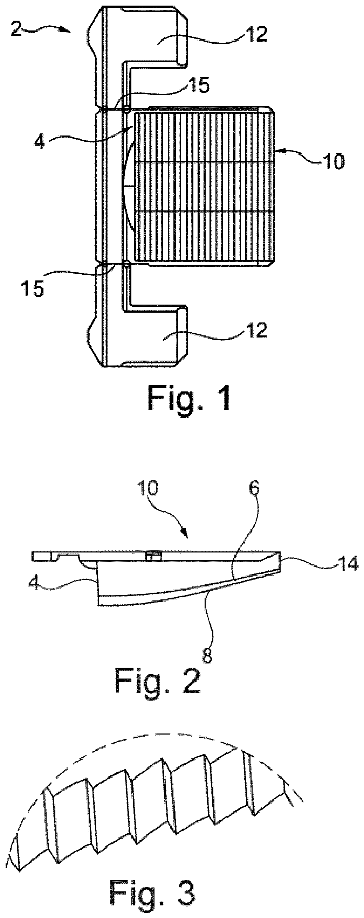

Figs. 1 and 2 depict a top view of a light guiding device 2 having a light incoupling side 4, a reflection side 6, a reflection layer 8, and a light outcoupling side 10. In the top view of Fig. 1 the reflection side 6 is disposed under the light outcoupling side 10 and the reflection layer 8 is disposed under the reflection side 6. The light outcoupling side 10 is disposed opposite the reflection side 6 and therefore also opposite the reflection layer 8, so that reflected light reaches the light outcoupling side 10 as uniformly as possible. The clearance between the light outcoupling side 10 and the reflection side 6 and therefore also the reflection layer 8 decreases as the distance from the light incoupling side 4 increases. The light outcoupling side 10 and the reflection side 6 can thus converge continuously or form an edge 14 that can also have a reflection layer 8.

By way of example Fig. 1 moreover depicts two holding devices 12, which extend away from the light guiding device 2 in the plane of the light outcoupling side 10, wherein each holding device demonstrates a predetermined breaking point 15. Depending on the application of the light guiding device, in a right or a left rearview device of a motor vehicle for example, the unneeded holding device 12 can be separated, broken off for example.

Fig. 2 depicts a side view of the light guiding device of Fig. 1. Light can enter the light guiding device 2 through the light incoupling side 4, especially basically parallel to the light outcoupling side 10. The reflection side 6 and the reflection layer 8 then deflect the light in the direction of the light outcoupling side 10.

Fig. 3 depicts an enlarged representation of a reflection side 6 and/or reflection layer 8 configured in a step-like configuration. Such a step-like configuration, which can alternatively or additionally be wave-like, can improve the guidance of the light beam arriving from the light incoupling side 4 to the effect that the light outcoupling by the light outcoupling side 10 is distributed as homogeneously as possible and uniformly across the light outcoupling side 10.

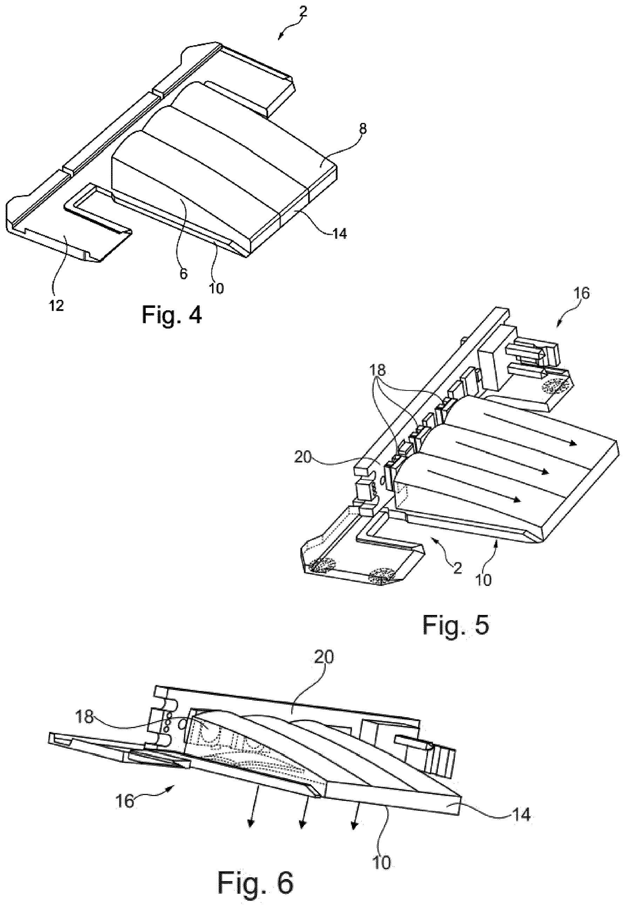

Fig. 4 depicts the light guiding device 2 in a perspective representation. The light guiding device 2, which is optimized for three light sources 18, has a reflection side 6 and reflection layer 8 configured with three funnels. The longitudinal axis of these funnels extends along the principal direction of the incoupled light. The light guiding device 2 can be adapted for any other number of light sources 18, such as 1, 2, 3, 4, 5, 6 or more.

Fig. 5 depicts an illumination device 16 having three light sources 18 which are arranged on a printed circuit board 20. The printed circuit board 20 having the LED light sources 18 is so arranged with respect to the light guiding device 2 that the light is emitted essentially parallel to the light outcoupling side 10, as illustrated by the arrows. To this end, the reflection side 6 and especially the reflection layer 8 deflect the light so that it leaves the light guiding device 2 via the light outcoupling side 10, as seen from the arrows in Fig. 6.

For example, both the reflection layer and the rest of the light guiding device of the known illumination device are made of PMMA. The light guiding device can also be a two-component plastic injection molded part, wherein the reflection layer is injected as an ABS plate, white or colored for example, and then the rest of the light guiding device is formed on the reflection layer with transparent or clear PMMA.

In known light guiding devices, it has proven disadvantageous that the light deflected by the light guiding device is outcoupled relatively inhomogeneously over a surface to be illuminated. This effect becomes ever more obvious, the larger the surface to be illuminated and the greater the distance between the surface to be illuminated and a light source. For example if a pictogram of small line width, 0.4 mm for example, of a blind spot monitor is backlit by a known light guiding device, the inhomgeneity can be negligible. As the line width of the pictogram increases, 1.0 mm for example, the inhomogeneity becomes quite visible and the user finds it disturbing. In the extreme case, a very non-uniform illumination of a pictogram can cause the user to misinterpret an indicator light as not illuminated.

It is the object of the invention to further develop the known rearview device to overcome the drawback of the prior art. In particular it is the object to enhance homogeneity of the light outputted from a light guiding device within a predefined region, preferably to equally illuminate a pattern like a pictogram acting as a warning symbol, without enhancing costs.

This object is achieved by a backing plate that comprises a first attachment means for the printed circuit board together with the light source on a front side of the backing plate, a second attachment means for attaching an actuator for the reflection surface on the rear side of the backing plate, with the reflection surface to be attached on a front side of the backing plate, a housing within which the light guiding device is mounted, and a white sheet, such that the white sheet is arranged next to the reflection side by the backing plate comprising the white sheet.

The backing plate can at least partly be molded from white material.

Further, the backing plate housing can comprise at least one opening passing from the rear side of the backing plate to the front side thereof, with the white sheet being arranged at least partly within the opening or is overlapping the opening at least partly.

It is proposed with the invention that the housing is at least partly molded from white material.

The opening can be formed as a logo pattern.

The backing plate can be formed together with the logo pattern, the first attachment means and the second attachment means in a first molding step, in particular by a first injection molding step.

With the invention it is preferred that the white sheet comprises at least one of a wooden pulp filter, or a paint.

The wooden pulp filter can comprise a piece of paper, and/or the wooden pulp filter is secured to the backing plate in a second molding and/or a coating step.

Embodiments of the invention can be characterized in that white sheet, in particular the wooden pulp filter, is arranged between the front side of the backing plate and the reflection surface.

The light guiding device can further include a color layer wherein the color layer has a heat resistance of around -40 °C to +115 °C.

The light incoupling side and the light outcoupling side of the light guiding device can be configured flat and these surfaces are arranged essentially orthogonal to one another.

It is preferred that the light guiding device is embodied so that light being at least one of coupled into the light guiding device, reflected and outcoupled, experiences one of no change in color or a change in color, wherein preferably the light experiences a change in color to substantially one of red, yellow, or green.

One or a plurality of color filters can be arranged on at least one of the light incoupling side, the reflection side, the light outcoupling side, and inside the light guiding device to achieve a change in color, wherein preferably light from a light source, which emits white light, is outcoupled colored from the light guiding device in at least one of red, yellow or green.

A heating layer can be arranged between the reflection surface and the backing plate. Still further, the invention provides embodiments of the rearview device, with the illumination device, being especially suited for an indicator of a blind spot monitor, wherein the light guiding device, the light source and the rearview reflection surface are arranged together in such a way that the light guiding device deflects the light emitted by the light source to a side of the rearview reflection surface facing away from the driver of the vehicle or facing to the driver of the vehicle. It is proposed that at least one region of the rearview reflection surface comprises a non-reflecting or partially reflecting part, especially in form of a pictogram, which is backlit by the light source and the light guiding device, wherein preferably the heating layer is provided with a recess overlapping the region of the rearview reflection surface.

The invention also provide a method for producing a rearview device according to the invention. Such a method can comprise the following steps: placing the white sheet, in particular in form of the wooden pulp filter, on the front side of the backing plate and placing a coat on the front side of the white sheet and at least a part of the front side of the backing plate surrounding the white sheet. The reflection surface, in particular in form of the mirror glass and/or carrying the heating layer, can be attached via the coat securing the wooden pulp filter on the backing plate.

Thus, the light guiding device of the illumination device of the rearview device of the invention has a light incoupling side for coupling light from a light source into the light guiding device, a reflection side having a reflection layer for reflecting the incoupled light and a light outcoupling side. The light outcoupling side is preferably disposed essentially opposite the reflection side. The clearance or rather distance between the reflection side and the light outcoupling side preferably basically decreases as the distance from the light incoupling side increases. This decrease of the clearance can occur at least partially non-linear. In other words, the reflection side and/or the reflection layer can not only extend linearly inclined relative to the light outcoupling side, but can also extend arc-shaped or convex. The reflection side having the reflection layer, is embodied so that the light arriving at the light outcoupling side from the light incoupling side is deflected in order to thus produce a light distribution on the light outcoupling side that is more uniform or is as uniform as possible.

The light guiding device can comprise a light guide body upon which the light incoupling side, the light outcoupling side and the reflection side are formed.

The light guiding device can be used in an illumination device to produce an illumination result over a certain surface that is as homogenous as possible by means of one or a plurality of light sources having a relatively limited light distribution, LEDs for example. The light guide device can be used in an indicator device of a motor vehicle, for example. An example is an indicator device in a rearview device like a driver assistance system, such as a blind spot monitor. The light guiding device according to the invention can particularly be used for the most homogenous possible illumination or backlighting of a pictogram, such as a blind spot monitor for example.

The reflection layer is arranged on the reflection side. The reflection layer is a paint or lacquer layer that is imprinted or evaporation-coated on the reflection side.

The reflection layer can also be made of another material or of the same material as the rest of the light guiding device. Preferred materials are plastics, especially acrylonitrile-butadiene-styrene (ABS) and or polymethyl methacrylate (PMMA) or plastics with similar material properties. For example, both the reflection layer and the rest of the light guiding device are made of PMMA. The light guiding device can also be a two-component plastic injection molded part, wherein the reflection layer is injected as an ABS plate, white or colored for example, and then the rest of the light guiding device is formed on the reflection layer with transparent or clear PMMA.

The reflection side and/or the reflection layer can be configured at least partially step-like and/or wave-like. The steps or waves are embodied so that the light arriving from the light incoupling side is deflected so that it exits from the light outcoupling side as uniformly as possible.

The light incoupling side and the light outcoupling side can be configured flat and these surfaces can be arranged essentially orthogonal or approximately orthogonal to one another. The surfaces of the light incoupling side and the light outcoupling side can form planes. The upper surface of the light incoupling side can be embodied or shaped in such a manner that light arriving from a light source is coupled into the light guiding device as completely as possible and preferably as parallel to the light outcoupling side as possible. To this end in particular the light incoupling side can demonstrate one or a plurality of optical systems and/or recesses, wherein light sources can be at least partially inserted into the recesses.

The light guiding device can be embodied so that light coupled into the light guiding device and/or reflected and/or outcoupled essentially experiences no change in color. To this end, the reflection layer can be made of a color-neutral material, which is silvery or white. A change in color can be obtained by arranging one or a plurality of color filters on the light incoupling side and/or the reflection side and/or the reflection layer and/or the light outcoupling side and/or inside the light guiding device. The light from a light source that emits white light can thereby be coupled out of the light guiding device colored, red or yellow or green for example. A color layer can have a heat resistance of around -40 °C to +115 °C.

The light guiding device can furthermore demonstrate one or a plurality of holding devices to tightly or loosely fasten the light guiding device to a printed circuit board.

The invention furthermore relates to a rearview device with an illumination device having a light guiding device comprising at least one of the aforementioned features and a printed circuit board upon which at least one light source is arranged. The light source is arranged relative to the light guiding device so that the light emitted by the light source is at least partially incoupled on the light incoupling side of the light guiding device. The light is subsequently reflected from the reflection side and/or the reflection layer and outcoupled on the light outcoupling side. The illumination device can be used in a motor vehicle, such as in an indicator device of a rearview device of a motor vehicle.

Also described is a method for producing a light guiding device for a rearview device. To this end, the reflection layer can be arranged on the base body in a pad printing machine, wherein optional cover templates can be used.

In addition, the detailed description describes a rearview device for a motor vehicle comprising a rearview reflection surface, one or a plurality of illuminants and a light guiding device according to the invention, wherein the illuminant and the light guiding device can be an indicator of a blind spot monitor. To this end, the light guiding device, light source and rearview reflection surface can be arranged together in such a way that the light guiding device deflects the light emitted by the light source to a side of the rearview reflection surface facing away from the driver of the vehicle. Thus one area of the rearview reflection surface can be visibly illuminated for the driver to provide an indicator function, a blind spot monitor for example.

One region of the rearview reflection surface can comprise a recess or a partially reflecting part, such as a pictogram that the light source and the light guiding device visibly backlight for a driver. Various aspects of this invention will become apparent to those skilled in the art from the following detailed description of the preferred embodiments, when read in light of the accompanying, schematic drawings.
- Fig. 1: is a top view of a known light guiding device;
- Fig. 2: is a side view of the light guiding device according to Fig. 1;
- Fig. 3: is an enlargement of a reflection side or reflection layer of the light guiding device according to Fig. 1 having a step-like structure;
- Fig. 4: is a perspective view of the light guiding device according to Fig. 1;
- Fig. 5: is a perspective view of a known illumination device having a light guiding device with focus on the light incoupling;
- Fig. 6: is a perspective view of an illumination device having a light guiding device with focus on the light outcoupling;
- Fig. 7a: is an exploded view of a rearview device having a light guiding device; and
- Fig. 7b: is an exploded view of a rearview device according to the invention having a light guiding device and a white sheet.

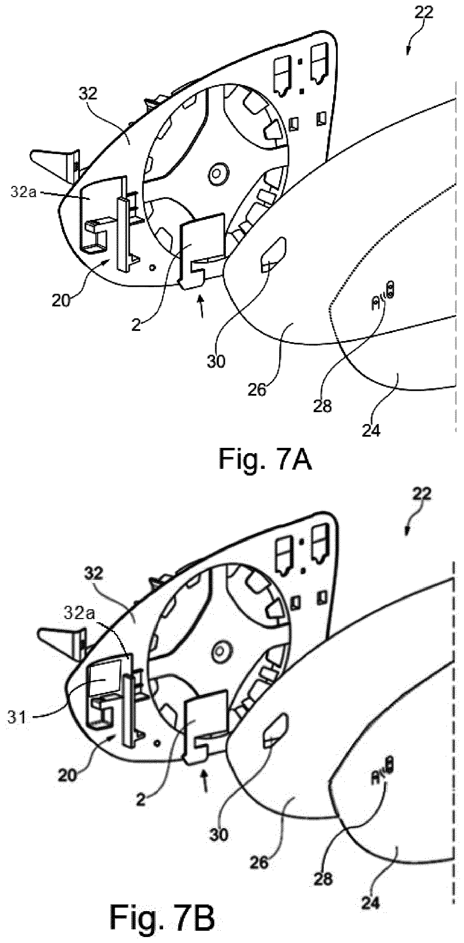

Fig. 7a depicts an exploded view of a rearview device 22 having a light guiding device 2, which can be arranged on a printed circuit board 20 or directly on a backing plate 32. The backing plate 32 can have a variety of attachment means to secure the printed circuit board 20, a light source 18, and/or the light guiding device 2. Such attachment means can include: glue, tape, snaps, quick connectors, clips, rivets, nails, screws, silicone, prongs as well as other connections and attachments known in the art.

The rearview device 22 furthermore has a rearview reflection surface 24, such as mirrored glass, and a heating layer 26 thereunder, wherein the rearview reflection surface 24 has a pictogram 28, for a blind spot monitor indicator, which can be illuminated by the light guiding device 2 and by a recess 30 in the heating layer 26. The printed circuit board 20, the light guiding device 2 and the rearview reflection surface 24 having the heating layer 26, can be arranged on the backing plate 32. The backing plate 32 also has at least one opening 32a that passes from the rear side of the backing plate 32 to the front side of the backing plate 32. The opening 32a in the backing plate 32 can be formed in the shape of a logo pattern and form a housing within which the light guiding device is mounted.

In addition, the rearview device 22 can also be provided with an actuator attaching the rear side of the backing plate 32 to the rearview reflection surface 24, such that the rearview reflection surface 24 is attached on a front side of the backing plate 32. The attachment means for attaching the actuator to the backing plate 32 can include: glue, tape, snaps, quick connectors, clips, rivets, nails, screws, silicone, prongs as well as other connections and attachments known in the art. For the sake of clarity, the actuator, attachment means and remaining parts of the rearview device 22, like the housing for example, are not illustrated.

Fig. 7b depicts an explosion view of an embodiment of the rearview device 22 of the present invention further comprising a white sheet 31. The white sheet 31 is provided in, around, or overlapping the backing plate opening 32a. The white sheet 31 can be comprised of a wooden pulp filter, such as, a piece of paper. Further, the white sheet 31 between the front side of the backing plate 32 and the reflection surface 24. The white sheet 31 is arranged next to the reflection side 6.

The illumination devices and embodiments described herein can be constructed in an exemplary manner as follows:
The backing plate 32 can be formed together with the backing plate opening 32a in the shape of a logo, the attachment means for attaching the printed circuit board 20 with the light source 18, and
the attachment means for attaching the actuator, by a first injection molding step. A white material can be used in the first injection molding step such that the backing plate is formed from said white material. Further, the white sheet 31 can then be place on the front or rear of the backing plate 32 and secured by a second molding and/or coating step. In addition, the coating securing the white sheet 31 in place can also be placed on the rear side of the printed circuit board 20 to secure the circuit board 20 to the rear side of the backing plate 32 and the white sheet 31.
Optionally, the coating securing the white sheet 31 can also be used to attach the rearview reflection surface 24, such as mirror glass, to the backing plate 32.

### Reference Signs

- 2: light guiding device
- 4: light incoupling side
- 6: reflection side
- 10: light outcoupling
- 12: holding device
- 14: edge
- 15: breaking point
- 16: illumination device:
- 18: light source
- 20: printed circuit board
- 22: rearview device
- 24: reflection surface
- 28: pictogram
- 30: recess
- 31: white sheet
- 32: backing plate
- 32a: opening

## Claims

1. A rearview device (22) for a motor vehicle having a rearview reflection surface (24) and an illumination device (16), comprising:
• at least one light source (18),
• a printed circuit board (20) to which the light source (18) is coupled, and
a light guiding device (2) with a light incoupling side (4) for incoupling light from the light source (18); a reflection side (6); and a light outcoupling side (10), which is disposed generally opposite the reflection side (6), wherein the distance between the reflection side (6) and the light outcoupling side (10) generally decreases as the distance from the light incoupling side (4) increases, and wherein the reflection side (6) is configured so that light arriving from the light incoupling side (4) is deflected to the light outcoupling side (10), **characterized by** a backing plate (32), which comprises
• a first attachment means for the printed circuit board (20) together with the light source (18) on a front side of the backing plate (32),
• a second attachment means for attaching an actuator for the reflection surface (24) on the rear side of the backing plate (32), with the reflection surface (24) to be attached on a front side of the backing plate (32),
• a housing within which the light guiding device (2) is mounted, and
• a white sheet (31),
such that the white sheet (31) is arranged next to the reflection side (6) by the backing plate (32).

2. The rearview device (22) according to claim 1, **characterized in that** the reflection surface (24) is provided in form of a mirror glass.

3. The rearview device (22) according to claim 1 or 2, **characterized in that** the backing plate is at least partly molded from white material.

4. The rearview device (22) according to any one of the preceding claims, **characterized in that** the housing of the backing plate (32) comprises at least one opening (32a) passing from the rear side of the backing plate (32) to the front side thereof, with the white sheet (31) being arranged at least partly within the opening (32a) or is overlapping the opening (32a) at least partly.

5. The rearview device (22) according to any one of the preceding claims, **characterized in that** the housing is at least partly molded from white material.

6. The rearview device (22) according to claim 4 or 5, **characterized in that** the opening (32a) is formed as a logo pattern.

7. The rearview device (22) according to claim 6, **characterized in that**
the backing plate (32) is formed together with the logo pattern, the first attachment means and the second attachment means.

8. The rearview device (22) according to any one of the preceding claims, **characterized in that** the white sheet (31) comprises at least one of a wooden pulp filter, or a paint.

9. The rearview device (22) according to claim 8, **characterized in that**
the wooden pulp filter comprises a piece of paper, and/or
the wooden pulp filter is secured to the backing plate (32).

10. The rearview device (22) according to any one of the preceding claims, **characterized in that** white sheet (31), in particular the wooden pulp filter, is arranged between the front side of the backing plate (32) and the reflection surface (24).

11. The rearview device (22) according to any one of the preceding claims, **characterized in that** the light guiding device (2) further includes a color layer wherein the color layer has a heat resistance of around -40 °C to +115 °C.

12. The rearview device (22) according to any one of the preceding claims, **characterized in that** the light incoupling side (4) and the light outcoupling side (10) of the light guiding device (2) are configured flat and these surfaces are arranged essentially orthogonal to one another.

13. The rearview device (22) according to any one of the preceding claims, **characterized in that** the light guiding device (2) is embodied so that light being at least one of coupled into the light guiding device, reflected and outcoupled, experiences one of no change in color or a change in color,
wherein preferably the light experiences a change in color to substantially one of red, yellow, or green.

14. The rearview device (22) according to any one of the preceding claims, **characterized by** one or a plurality of color filters on at least one of the light incoupling side (4), the reflection side (6), the light outcoupling side (10), and inside the light guiding device (2) to achieve a change in color,
wherein preferably light from a light source, which emits white light, is outcoupled colored from the light guiding device (2) in at least one of red, yellow or green.

15. The rearview device (22) according to any one of the preceding claims, **characterized by** a heating layer (26) between the reflection surface (24) and the backing plate (32).

16. The rearview device (22) according to any one of the preceding claims, wherein the light guiding device (2), the light source (18) and the rearview reflection surface (24) are arranged together in such a way that the light guiding device (2) deflects the light emitted by the light source (18) to a side of the rearview reflection surface (24) facing away from the driver of the vehicle or facing to the driver of the vehicle.

17. The rearview device according to claim 16, wherein
at least one region of the rearview reflection surface (24) comprises a non-reflecting or partially reflecting part, especially in form of a pictogram (28), which is backlit by the light source (18) and the light guiding device (2), especially to provide an indicator of a blind spot monitor.

18. The rearview device according to claim 17, wherein
the heating layer (26) is provided with a recess (30) overlapping the region of the rearview reflection surface (24).

19. A method for producing a rearview device according to any one of the preceding claims, **characterized by** the following steps:
• placing the white sheet (31), in particular in form of the wooden pulp filter, on the front side of the backing plate (32) and
• placing a coat on the front side of the white sheet (31) and at least a part of the front side of the backing plate (32) surrounding the white sheet (31).

20. The method of claim 19, wherein
the reflection surface (24), in particular in form of the mirror glass and/or carrying the heating layer (26), is attached via the coat securing the white sheet (31) on the backing plate (32).

## Patentansprüche

1. Rückblickvorrichtung (22) für ein Kraftfahrzeug, aufweisend eine Rückblickreflexionsfläche (24) und eine Beleuchtungsvorrichtung (16), umfassend:
• mindestens eine Lichtquelle (18),
• eine gedruckte Leiterplatte (20), an welche die Lichtquelle (18) gekoppelt ist, und
eine Lichtleitvorrichtung (2) mit einer Lichteinkopplungsseite (4) zum Einkoppeln von Licht von der Lichtquelle (18); einer Reflexionsseite (6); und einer Lichtauskopplungsseite (10), die allgemein gegenüber der Reflexionsseite (6) angeordnet ist, wobei sich der Abstand zwischen der Reflexionsseite (6) und der Lichtauskopplungsseite (10) allgemein verringert, wenn sich der Abstand von der Lichteinkopplungsseite (4) erhöht, und wobei die Reflexionsseite (6) so ausgelegt ist, dass von der Lichteinkopplungsseite (4) ankommendes Licht zur Lichtauskopplungsseite (10) abgelenkt wird, **gekennzeichnet durch** eine Trägerplatte (32), die Folgendes umfasst:
• ein erstes Anbringungsmittel für die gedruckte Leiterplatte (20) zusammen mit der Lichtquelle (18) auf einer Vorderseite der Trägerplatte (32),
• ein zweites Anbringungsmittel zum Anbringen eines Aktuators für die Reflexionsfläche (24) auf der Rückseite der Trägerplatte (32), wobei die Reflexionsfläche (24) auf einer Vorderseite der Trägerplatte (32) anzubringen ist,
• ein Gehäuse, innerhalb dem die Lichtleitvorrichtung (2) montiert ist, und
• eine weiße Folie (31),
sodass die weiße Folie (31) durch die Trägerplatte (32) neben der Reflexionsseite (6) angeordnet ist.

2. Rückblickvorrichtung (22) nach Anspruch 1, **dadurch gekennzeichnet, dass** die Reflexionsfläche (24) in Form eines Spiegelglases bereitgestellt ist.

3. Rückblickvorrichtung (22) nach Anspruch 1 oder 2, **dadurch gekennzeichnet, dass** die Trägerplatte mindestens teilweise aus weißem Material geformt ist.

4. Rückblickvorrichtung (22) nach einem der vorangehenden Ansprüche, **dadurch gekennzeichnet, dass** das Gehäuse der Trägerplatte (32) mindestens eine Öffnung (32a) umfasst, die von der Rückseite der Trägerplatte (32) zu deren Vorderseite verläuft, wobei die weiße Folie (31) mindestens teilweise innerhalb der Öffnung (32a) angeordnet ist oder die Öffnung (32a) mindestens teilweise überlappt.

5. Rückblickvorrichtung (22) nach einem der vorangehenden Ansprüche, **dadurch gekennzeichnet, dass** das Gehäuse mindestens teilweise aus weißem Material geformt ist.

6. Rückblickvorrichtung (22) nach Anspruch 4 oder 5, **dadurch gekennzeichnet, dass** die Öffnung (32a) als ein Logomuster ausgebildet ist.

7. Rückblickvorrichtung (22) nach Anspruch 6, **dadurch gekennzeichnet, dass** die Trägerplatte (32) zusammen mit dem Logomuster, dem ersten Anbringungsmittel und dem zweiten Anbringungsmittel ausgebildet ist.

8. Rückblickvorrichtung (22) nach einem der vorangehenden Ansprüche, **dadurch gekennzeichnet, dass** die weiße Folie (31) ein Holzzellstofffilter und/oder eine Farbe umfasst.

9. Rückblickvorrichtung (22) nach Anspruch 8, **dadurch gekennzeichnet, dass**
das Holzzellstofffilter ein Stück Papier umfasst, und/oder
das Holzzellstofffilter an der Trägerplatte (32) gesichert ist.

10. Rückblickvorrichtung (22) nach einem der vorangehenden Ansprüche, **dadurch gekennzeichnet, dass** die weiße Folie (31), insbesondere der Holzzellstofffilter, zwischen der Vorderseite der Trägerplatte (32) und der Reflexionsfläche (24) angeordnet ist.

11. Rückblickvorrichtung (22) nach einem der vorangehenden Ansprüche, **dadurch gekennzeichnet, dass** die Lichtleitvorrichtung (2) ferner eine Farbschicht umfasst, wobei die Farbschicht eine Wärmebeständigkeit von etwa -40 °C bis +115 °C aufweist.

12. Rückblickvorrichtung (22) nach einem der vorangehenden Ansprüche, **dadurch gekennzeichnet, dass**
die Lichteinkopplungsseite (4) und die Lichtauskopplungsseite (10) der Lichtleitvorrichtung (2) flach ausgestaltet sind und diese Oberflächen im Wesentlichen senkrecht zueinander angeordnet sind.

13. Rückblickvorrichtung (22) nach einem der vorangehenden Ansprüche, **dadurch gekennzeichnet, dass** die Lichtleitvorrichtung (2) so ausgestaltet ist, dass Licht, welches mindestens in die Lichtleitvorrichtung eingekoppelt, von ihr reflektiert und/oder aus ihr ausgekoppelt wird, entweder keine Veränderung in der Farbe oder eine Veränderung in der Farbe erfährt,
wobei das Licht vorzugsweise eine Veränderung in der Farbe zu im Wesentlichen einer aus Rot, Gelb oder Grün erfährt.

14. Rückblickvorrichtung (22) nach einem der vorangehenden Ansprüche, **gekennzeichnet durch** einen oder eine Vielzahl von Farbfiltern auf der Lichteinkopplungsseite (4), der Reflexionsseite (6), der Lichtauskopplungsseite (10) und/oder der Innenseite der Lichtleitvorrichtung (2), um eine Veränderung in der Farbe zu erreichen,
wobei vorzugsweise Licht von einer Lichtquelle, die weißes Licht emittiert, von der Lichtleitvorrichtung (2) in Rot, Gelb und/oder Grün gefärbt ausgekoppelt wird.

15. Rückblickvorrichtung (22) nach einem der vorangehenden Ansprüche, **gekennzeichnet durch** eine Heizschicht (26) zwischen der Reflexionsfläche (24) und der Trägerplatte (32).

16. Rückblickvorrichtung (22) nach einem der vorangehenden Ansprüche, wobei die Lichtleitvorrichtung (2), die Lichtquelle (18) und die Rückblickreflexionsfläche (24) gemeinsam in einer solchen Weise angeordnet sind, dass die Lichtleitvorrichtung (2) das von der Lichtquelle (18) emittierte Licht zu einer Seite der Rückblickreflexionsfläche (24) ablenkt, die vom Fahrer des Fahrzeugs abgewandt oder dem Fahrer des Fahrzeugs zugewandt ist.

17. Rückblickvorrichtung nach Anspruch 16, wobei
mindestens eine Region der Rückblickreflexionsfläche (24) einen nicht reflektierenden oder teilweise reflektierenden Teil umfasst, insbesondere in Form eines Piktogramms (28), der durch die Lichtquelle (18) und die Lichtleitvorrichtung (2) hintergrundbeleuchtet ist, insbesondere, um einen Indikator einer Totwinkelüberwachung bereitzustellen.

18. Rückblickvorrichtung nach Anspruch 17, wobei
die Heizschicht (26) mit einer Vertiefung (30) versehen ist, die die Region der Rückblickreflexionsfläche (24) überlappt.

19. Verfahren zum Herstellen einer Rückblickvorrichtung nach einem der vorangehenden Ansprüche, **gekennzeichnet durch** die folgenden Schritte:
• Platzieren der weißen Folie (31), insbesondere in Form des Holzzellstofffilters, auf der Vorderseite der Trägerplatte (32), und
• Platzieren einer Schicht auf der Vorderseite der weißen Folie (31) und mindestens einem Teil der Vorderseite der Trägerplatte (32), die die weiße Folie (31) umgibt.

20. Verfahren nach Anspruch 19, wobei
die Reflexionsfläche (24), insbesondere in Form des Spiegelglases und/oder die Heizschicht (26) tragend, über die Schicht, welche die weiße Folie (31) an der Trägerplatte (32) sichert, angebracht ist.

## Revendications

1. Dispositif de rétroviseur (22) pour un véhicule à moteur comportant une surface de réflexion arrière (24) et un dispositif d'éclairage (16), comprenant :
• au moins une source de lumière (18),
• une carte de circuit imprimé (20) à laquelle la source de lumière (18) est couplée, et un dispositif de guidage de la lumière (2) avec une face de couplage de la lumière (4) pour coupler la lumière de la source de lumière (18) ; une face de réflexion (6) ; et une face de découplage de la lumière (10), qui est disposé généralement à l'opposé de la face de réflexion (6), dans lequel la distance entre la face de réflexion (6) et la face de découplage de la lumière (10) diminue généralement lorsque la distance de la face de couplage de la lumière (4) augmente, et dans lequel la face de réflexion (6) est configuré de sorte que la lumière arrivant de la face de couplage de la lumière (4) est déviée vers la face de découplage de la lumière (10), **caractérisé par** une plaque de support (32), qui comprend
• un premier dispositif de fixation pour la carte de circuit imprimé (20) avec la source de lumière (18) sur une face avant de la plaque de support (32),
• un second dispositif de fixation pour fixer un actionneur pour la surface de réflexion (24) sur la face arrière de la plaque de support (32), la surface de réflexion (24) devant être fixée sur une face avant de la plaque de support (32),
• un cadre dans lequel le dispositif de guidage de la lumière (2) est monté, et
• une feuille blanche (31),
de sorte que la feuille blanche (31) est disposée à côté de la face de réflexion (6) par la plaque de support (32).

2. Dispositif de rétroviseur (22) selon la revendication 1, **caractérisé en ce que** la surface de réflexion (24) est prévue sous forme de miroir.

3. Dispositif de rétroviseur (22) selon les revendications 1 ou 2, **caractérisé en ce que** la plaque de support est au moins partiellement moulée en matériau blanc.

4. Dispositif de rétroviseur (22) selon l'une quelconque des revendications précédentes, **caractérisé en ce que**
le cadre de la plaque de support (32) comprend au moins une ouverture (32a) allant de la face arrière de la plaque de support (32) à la face avant de celle-ci, la feuille blanche (31) étant disposée au moins partiellement à l'intérieur de l'ouverture (32a) ou chevauchant au moins partiellement l'ouverture (32a).

5. Dispositif de rétroviseur (22) selon l'une quelconque des revendications précédentes, **caractérisé en ce que**
le cadre est au moins partiellement moulé en matériau blanc.

6. Dispositif de rétroviseur (22) selon la revendication 4 ou 5, **caractérisé en ce que** l'ouverture (32a) est formée comme un motif de logo.

7. Dispositif de rétroviseur (22) selon la revendication 6, **caractérisé en ce que** la plaque de support (32) est formée conjointement avec le motif de logo, le premier dispositif de fixation et le second dispositif de fixation.

8. Dispositif de rétroviseur (22) selon l'une quelconque des revendications précédentes, **caractérisé en ce que**
la feuille blanche (31) comprend un filtre en pâte de bois et/ou une peinture.

9. Dispositif de rétroviseur (22) selon la revendication 8, **caractérisé en ce que**
le filtre en pâte de bois comprend un morceau de papier, et/ou
le filtre en pâte de bois est fixé à la plaque de support (32).

10. Dispositif de rétroviseur (22) selon l'une quelconque des revendications précédentes, **caractérisé en ce que**
la feuille blanche (31), notamment le filtre en pâte de bois, est disposée entre la face avant de la plaque de support (32) et la surface de réflexion (24).

11. Dispositif de rétroviseur (22) selon l'une quelconque des revendications précédentes, **caractérisé en ce que**
le dispositif de guidage de la lumière (2) comprend en outre une couche de couleur dans lequel la couche de couleur a une résistance à la chaleur d'environ -40 °C à +115 °C.

12. Dispositif de rétroviseur (22) selon l'une quelconque des revendications précédentes, **caractérisé en ce que**
la face de couplage de la lumière (4) et la face de découplage de la lumière (10) du dispositif de guidage de la lumière (2) sont configurées de manière plane et ces surfaces sont disposées essentiellement de manière orthogonale l'une par rapport à l'autre.

13. Dispositif de rétroviseur (22) selon l'une quelconque des revendications précédentes, **caractérisé en ce que**
le dispositif de guidage de la lumière (2) est conçu de sorte que la lumière étant au moins une fois couplée dans le dispositif de guidage de la lumière, réfléchie et découplée, ne subisse aucun changement de couleur ou subisse un changement de couleur,
dans lequel, de préférence, la lumière subit un changement de couleur essentiellement vers l'une des couleurs suivantes : rouge, jaune ou vert.

14. Dispositif de rétroviseur (22) selon l'une quelconque des revendications précédentes, **caractérisé par**
un ou une pluralité de filtres de couleur sur la face de couplage de la lumière (4), la face de réflexion (6), la face de découplage de la lumière (10), et/ou à l'intérieur du dispositif de guidage de la lumière (2) pour obtenir un changement de couleur,
dans lequel, de préférence, la lumière d'une source de lumière, qui émet une lumière blanche, est découplée colorée du dispositif de guidage de la lumière (2) dans rouge, jaune et/ou vert.

15. Dispositif de rétroviseur (22) selon l'une quelconque des revendications précédentes, **caractérisé par**
une couche chauffante (26) entre la surface de réflexion (24) et la plaque de support (32).

16. Dispositif de rétroviseur (22) selon l'une quelconque des revendications précédentes, dans lequel le dispositif de guidage de la lumière (2), la source de lumière (18) et la surface de réflexion arrière (24) sont disposés ensemble de sorte que le dispositif de guidage de la lumière (2) dévie la lumière émise par la source de lumière (18) vers une face de la surface de réflexion arrière (24) opposée au conducteur du véhicule ou tournée vers le conducteur du véhicule.

17. Dispositif de rétroviseur selon la revendication 16, dans lequel au moins une zone de la surface de réflexion arrière (24) comprend une partie non réfléchissante ou partiellement réfléchissante, notamment sous la forme d'un pictogramme (28), qui est rétroéclairé par la source de lumière (18) et le dispositif de guidage de la lumière (2), notamment pour fournir un indicateur de surveillance d'un angle mort.

18. Dispositif de rétroviseur selon la revendication 17, dans lequel la couche chauffante (26) est pourvue d'un creux (30) chevauchant la zone de la surface de réflexion arrière (24).

19. Procédé de fabrication d'un dispositif de rétroviseur selon l'une quelconque des revendications précédentes, **caractérisé par** les étapes suivantes :
• le placement de la feuille blanche (31), notamment sous la forme du filtre en pâte de bois, sur la face avant de la plaque de support (32) et
• le placement d'un revêtement sur la face avant de la feuille blanche (31) et sur au moins une partie de la face avant de la plaque de support (32) entourant la feuille blanche (31).

20. Procédé selon la revendication 19, dans lequel
la surface de réflexion (24), notamment sous forme de miroir et/ou portant la couche chauffante (26), est fixée par l'intermédiaire du revêtement fixant la feuille blanche (31) sur la plaque de support (32).
